# EUROPÄISCHE PATENTSCHRIFT

(11) **EP 2 527 813 B1**
(45) Veröffentlichungstag und Bekanntmachung des Hinweises auf die Patenterteilung: **01.02.2017**
(21) Anmeldenummer: 12167746.2
(22) Anmeldetag: 11.05.2012
(51) Int. Cl.: G01M 17/007, G01M 17/08

(54) **Testvorrichtung mit einer Aufnahmevorrichtung für eine Fahrzeugattrappe und Verfahren zum Testen eines Testfahrzeugs mittels einer Testvorrichtung**
Testing device with one holding device for a dummy vehicle and method for testing a test vehicle with a testing device
Dispositif de test avec un dispositif de réception pour une maquette de véhicule automobile et procédé de test d'un véhicule automobile au moyen d'un dispositif de test

(30) Priorität: 11.05.2011 DE 102011050274; 08.07.2011 DE 102011051704
(43) Veröffentlichungstag der Anmeldung: 28.11.2012
(73) Patentinhaber: ADAC e.V., 81373 München (DE)
(72) Erfinder: Sacher, Alois, 85757 Karlsfeld (DE); Sandner, Volker, 86916 Kaufering (DE)
(74) Vertreter: Schweiger, Martin

(56) Entgegenhaltungen:
- US-A- 5 325 700

## Beschreibung

Die Erfindung betrifft eine Testvorrichtung mit einer Aufnahmevorrichtung für eine Fahrzeugattrappe für Testfahrzeuge, insbesondere für Testfahrzeuge mit Assistenzsystemen, sowie ein Verfahren zum Testen eines Testfahrzeugs mittels einer Testvorrichtung.

Um die Unfallfolgen bei einem Auffahrunfall zu reduzieren oder eine Kollision ganz zu verhindern, werden in Fahrzeugen Assistenzsysteme, insbesondere vorausschauende Frontschutzsysteme (z.B. Adaptive Cruise Control (ACC) und Notbremsassistenzsysteme (Advanced Emergency Braking System, AEBS)) verbaut. Diese erkennen mittels Radarsensor, Kamera und/oder Laser vorausfahrende Fahrzeuge, warnen den Fahrer bei einer drohenden Kollision und/oder leiten eine autonome Bremsung ein. Der Anprall wird verhindert oder die Anprallgeschwindigkeit wird reduziert.

Bisher bekannte Testvorrichtungen bestehen aus einem Trägerfahrzeug, bei dem das Heck einer Fahrzeugattrappe während der Fahrt seitlich ausgefahren werden kann oder auch Fahrzeugattrappen auf einem Anhänger, der mit einem Seilzug von einem Zugfahrzeug gezogen wird. Diese Systeme können Nachteile haben, weil der Geschwindigkeitsabbau zum Zeitpunkt des Anpralls nicht exakt erfasst werden kann, sofern die Testvorrichtung nicht für einen Anprall mit einer Restgeschwindigkeit ausgelegt ist. Darüber hinaus kann die fehlende Stabilisierung der Fahrzeugattrappe durch Seitenwind oder Pendelbewegungen der Fahrzeugattrappe durch Seitenwind insbesondere bei niedrigen oder hohen Geschwindigkeiten ein Problem sein. Ferner existieren Testvorrichtungen, die ausschließlich bei beschleunigter oder konstanter Fahrt eingesetzt werden können, jedoch nicht bei verzögerter Fahrt. Eine weitere Herausforderung liegt in der Unterscheidung zwischen der Fahrzeugattrappe und dem Trägerfahrzeug als relevantes Ziel für das Assistenzsystem des Testfahrzeugs.

Aus der US 5 325 700 A sind ein Prüfgerät für eine Schienenfahrzeug-Dämpfereinheit und ein Prüfverfahren bekannt. Eine Schienenfahrzeug-Dämpfereinheit wird durch Anwenden einer Kraft, welche erforderlich ist, um die Dämpfereinheit in einer kontrollierten Bewegungen bei einer vorbestimmten Geschwindigkeit oder vorbestimmten Geschwindigkeiten gemäß einem Bewegungsprofil zu bewegen, getestet. Das Leistungsverhalten der Dämpfereinheit wird durch Messen der Kraft, welche an mehreren Positionen während des Bewegungsprofils angewendet wird und durch Vergleichen der Kraft mit einem Standard für Dämpfereinheiten in gutem Zustand an den Positionen analysiert. Alternativ werden ein Dämpfungskoeffizient oder andere Leistungsverhaltens-Parameter für die Dämpfereinheit aus der angewandten Kraft und der Position der Dämpfereinheit berechnet und mit einem Standard verglichen, um das Leistungsverhalten der Dämpfereinheit zu analysieren. Ein Prüfgerät zum Durchführen einer Dämpfereinheits-Prüfung weist einen Hydraulikkolben und einen elektronischen Bewegungs-Controller zum Anwenden der Kraft auf die Dämpfereinheit auf. Der Bewegungs-Controller verwendet ein Bewegungs-Feedback von einem Lagesensor, um die kontrollierte Bewegung für die Dämpfereinheit bereitzustellen.

Aufgabe der Erfindung ist es, eine Testvorrichtung zum Testen von Testfahrzeugen, insbesondere von Testfahrzeugen mit Assistenzsystemen, anzugeben, welche es ermöglicht, die Kollisionskräfte nach einem Anprall durch das Testfahrzeug zu reduzieren. Weiterhin ist es Aufgabe der Erfindung, ein Verfahren zum Testen eines Testfahrzeugs mittels einer Testvorrichtung anzugeben.

Dies wird mit dem Gegenstand der unabhängigen Ansprüche gelöst. Vorteilhafte Weiterbildungen der Erfindung ergeben sich aus den abhängigen Ansprüchen.

Erfindungsgemäß wird eine Testvorrichtung zum Testen von Testfahrzeugen, insbesondere von Testfahrzeugen mit Assistenzsystemen, bereitgestellt, wobei die Testvorrichtung eine Aufnahmevorrichtung für eine Fahrzeugattrappe aufweist. Zudem weist die Testvorrichtung ein fahrbares Schienensystem auf. Die Aufnahmevorrichtung für eine Fahrzeugattrappe ist auf dem fahrbaren Schienensystem der Testvorrichtung aufgesetzt und verschiebbar angeordnet. Das Schienensystem ist auf Führungsrollen gelagert. Zudem weist die Aufnahmevorrichtung für eine Fahrzeugattrappe Seitenführungsrollen auf.

Dabei wird hier und im Folgenden unter einer Fahrzeugattrappe eine Nachbildung eines realen Fahrzeugs verstanden, wobei die Fahrzeugattrappe Abmessungen aufweist, die im Wesentlichen den Abmessungen des nachgebildeten, realen Fahrzeugs entsprechen. Insbesondere kann es sich bei der Fahrzeugattrappe um ein sogenanntes Balloon Car, d.h. eine aufblasbare Fahrzeugattrappe, handeln, das zudem systemtypische Merkmale insbesondere eines Kraftfahrzeuges aufweisen kann, die beispielsweise Sensoren vorausschauender Frontschutzsysteme für die Identifikation als Fahrzeug dienen können, z.B. Radarreflektoren, Schlussleuchten, Nummernschild, Heckscheibe und/oder Schatten.

Die erfindungsgemäße Testvorrichtung besitzt den Vorteil, dass nach einem Anprall des Testfahrzeugs auf die stehende oder bewegte Fahrzeugattrappe, diese durch das Testfahrzeug über das Schienensystem in Längsrichtung verschoben werden kann, wodurch die Kollisionskräfte deutlich reduziert werden.

Damit ermöglicht die erfindungsgemäße Testvorrichtung einen stabilisierten Fahrbetrieb der Fahrzeugattrappe und schließt bei einem Anprall das Schleudern der Fahrzeugattrappe durch eine vorgegebene Bewegungsrichtung aus.

Zudem ermöglicht die Testvorrichtung ein Überfahren der Zugvorrichtung der Fahrzeugattrappe in Längsrichtung sowie aufgrund des Abstandes zwischen Fahrzeugattrappe und Zugfahrzeug eine gute Unterscheidung insbesondere für vorausschauende Frontschutzsysteme des Testfahrzeugs.

Die erfindungsgemäße Testvorrichtung mit schienengeführter Fahrzeugattrappe ermöglicht dabei in vorteilhafter Weise, als stehendes oder in Längsrichtung bewegliches Schienensystem ohne Beschädigungen am Testfahrzeug die Leistungsfähigkeit verbauter Assistenzsysteme des Testfahrzeugs zu überprüfen.

Durch die Schienenführung ist die Testvorrichtung zudem unabhängig von Umwelteinflüssen, beispielsweise Wind, Regen oder Bodenwellen, einsetzbar.

Die Aufnahmevorrichtung für eine Fahrzeugattrappe ist in einer bevorzugten Ausführungsform schlittenartig ausgebildet.

Die Aufnahmevorrichtung für eine Fahrzeugattrappe ist auf dem fahrbaren Schienensystem aufgesetzt, d.h. das Schienensystem ist fahrbar bzw. verschiebbar ausgebildet. Dadurch kann mit der, auf der bevorzugt schlittenartigen Aufnahmevorrichtung befindlichen Fahrzeugattrappe ein stehendes, beschleunigendes, verzögerndes oder in Längsrichtung konstant fahrendes Fahrzeug simuliert werden.

Dies ermöglicht in vorteilhafter Weise, mit der beweglichen Fahrzeugattrappe ein fahrendes Fahrzeug zu simulieren, indem ein Zugfahrzeug an einer Anhängevorrichtung das Schienensystem zieht, an deren Ende sich die Fahrzeugattrappe befindet. Dazu kann das Schienensystem eine Anhängevorrichtung aufweisen. Das Zugfahrzeug kann die Fahrzeugattrappe beschleunigt, konstant oder verzögert bewegen. Das Testfahrzeug folgt dabei der Fahrzeugattrappe bevorzugt mit einer höheren Differenzgeschwindigkeit, um einen Anprall zu provozieren.

Die Aufnahmevorrichtung für eine Fahrzeugattrappe weist in einer weiteren Ausführungsform ein vertikal ausgerichtetes Zusatzgestell auf. Dies ermöglicht in weiter verbesserter Weise, die Anprallenergie des Testfahrzeuges aufzunehmen, flächig zu verteilen, in Längsbewegung umzusetzen und im Schienen- sowie gegebenenfalls Federsystem abzubauen.

In einer Ausgestaltung der Erfindung ist das Schienensystem mit einem oder mehreren Federsystemen ausgestattet. Dies ermöglicht in vorteilhafter Weise, die Bewegungsenergie der Aufnahmevorrichtung, beispielsweise als Schlitten mit Trägergestell für eine Fahrzeugattrappe, über die Anhängevorrichtung in das Zugfahrzeug zu leiten.

Eine Länge des Schienensystems kann durch das Vorsehen von Anfangs- und Endstücken sowie einer variablen Zahl von Mittelstücken in Abhängigkeit von in die Aufnahmevorrichtung bei einem Aufprall des Testfahrzeugs eingeleiteter Energie eingestellt sein. Die Anfangs-, End- und Mittelstücke des Schienensystems sind dabei bevorzugt durch gesicherte Verbindung zusammengefügt.

Das Schienensystem kann insbesondere ein Gitterträgeranfangsstück, mehrere Zwischenträger und ein Gitterträgerendstück beinhalten, wobei die Höhe der Gitterträgerkonstruktion über der Straße bei weniger als 70 mm liegt.

Erfindungsgemäß wird somit eine Testvorrichtung angegeben, die die Verwendung einer universell auf alle herstellerspezifischen Sensorsysteme kalibrierten Fahrzeugattrappe ermöglicht, die eine Fahrzeugattrappe mit geringer Eigenmasse verwendet, die einen stabilisierten Fahrbetrieb der Fahrzeugattrappe gewährleistet, die beim Anprall das Schleudern der Fahrzeugattrappe durch eine vorgegebene Bewegungsrichtung ausschließt und die ein Überfahren der Zugvorrichtung der Fahrzeugattrappe in Längsrichtung zulässt. Die Masse der Fahrzeugattrappe kann dabei so weit reduziert werden, dass nach einem Anprall durch das Testfahrzeug ohne Einschränkungen in der Stabilisierung der Fahrzeugattrappe die Kollisionskräfte deutlich reduziert werden können.

Für alle relevanten Fahrszenen kann die erfindungsgemäße Testvorrichtung eingesetzt werden, die dabei stehend, bei beschleunigter, konstanter und verzögerter Fahrt im Längsverkehr eingesetzt werden kann. Die Testvorrichtung ist durch die Schienenführung in vorteilhafter Weise unabhängig von Umwelteinflüssen einsetzbar und ermöglicht aufgrund des Abstandes zwischen Fahrzeugattrappe und Zugfahrzeug eine gute Unterscheidung zwischen Fahrzeugattrappe und Träger- bzw. Zugfahrzeug insbesondere für vorausschauende Frontschutzsysteme des Testfahrzeugs.

Es wird damit erfindungsgemäß eine Testvorrichtung mit schienengeführter Fahrzeugattrappe angegeben, welche es erlaubt, als stehendes oder in Längsrichtung bewegliches Schienensystem ohne Beschädigungen am Testfahrzeug die Leistungsfähigkeit der verbauten Assistenzsysteme des Testfahrzeugs zu überprüfen.

Die Erfindung betrifft zudem eine Baugruppe aus einem Zugfahrzeug, einer Fahrzeugattrappe und einer Testvorrichtung nach einer der genannten Ausführungsformen.

Insbesondere kann die Fahrzeugattrappe dabei als Balloon Car ausgebildet sein.

Die Erfindung betrifft weiterhin ein Verfahren zum Testen eines Testfahrzeugs mittels eines Zugfahrzeugs, einer Fahrzeugattrappe und einer Testvorrichtung nach einer der genannten Ausführungsformen, wobei das Verfahren folgende Schritte aufweist:
- Anordnen der Testvorrichtung hinter dem Zugfahrzeug und des Testfahrzeugs hinter der Testvorrichtung auf einer gemeinsamen Fahrspur;
- Verbinden der Testvorrichtung und des Zugfahrzeugs miteinander;
- Positionieren der Aufnahmevorrichtung für eine Fahrzeugattrappe und der Fahrzeugattrappe in einer Anfangsposition auf dem fahrbaren Schienensystem der Testvorrichtung;
- Beschleunigen des Zugfahrzeugs in einer ersten Richtung auf der gemeinsamen Fahrspur auf eine erste Geschwindigkeit v₁;
- Beschleunigen des Testfahrzeugs in der ersten Richtung auf der gemeinsamen Fahrspur auf eine zweite Geschwindigkeit v₂;
- Testen zumindest einer Komponente des Testfahrzeugs zumindest teilweise während des Beschleunigens des Zugfahrzeugs auf die erste Geschwindigkeit v₁ und des Beschleunigens des Testfahrzeugs auf die zweite Geschwindigkeit v₂.

Das Testen zumindest einer Komponente des Testfahrzeugs kann ein Testen eines Assistenzsystems des Testfahrzeugs, insbesondere eines vorausschauenden Frontschutzsystems des Testfahrzeugs, beinhalten.

Die Anfangsposition ist vorzugsweise an einem distal zu dem Zugfahrzeug gelegenen Ende der Testvorrichtung gelegen.

In einer weiteren Ausführungsform sind das Zugfahrzeug und das Schienensystem der Testvorrichtung aus Sicht des Testfahrzeugs durch die an dem distal zu dem Zugfahrzeug gelegenen Ende der Testvorrichtung angeordnete Fahrzeugattrappe im Wesentlichen verdeckt.

In einer weiteren Ausführungsform ist die zweite Geschwindigkeit v₂ größer als die erste Geschwindigkeit v₁, d.h. v₂ > v₁. In dieser Ausführungsform folgt das Testfahrzeug der Fahrzeugattrappe mit einer höheren Differenzgeschwindigkeit, um einen Anprall zu provozieren.

Nach einer Kollision des Testfahrzeugs mit der Fahrzeugattrappe kann das Testfahrzeug das Schienensystem der Testvorrichtung in Längsrichtung überfahren.

Die Erfindung wird nun anhand der beigefügten Figuren näher erläutert.
- Figur 1A: zeigt eine schematische Darstellung einer Ausführungsform einer erfindungsgemäßen Testvorrichtung mit einer Aufnahmevorrichtung für eine Fahrzeugattrappe;
- Figur 1B: zeigt eine schematische Darstellung einer Ausführungsform einer erfindungsgemäßen Testvorrichtung mit einer Aufnahmevorrichtung für eine Fahrzeugattrappe;
- Figur 2: zeigt eine schematische Darstellung einer Ausführungsform einer erfindungsgemäßen Testvorrichtung mit einer Aufnahmevorrichtung für eine Fahrzeugattrappe;
- Figur 3: zeigt eine Darstellung einer ersten Schienenkonstruktion mit einem als Normgitterrahmen ausgeführten Gitterträgeranfangsstück mit weiteren Anbauteilen;
- Figur 4: zeigt eine Darstellung einer zweiten Schienenkonstruktion mit einem als Normgitterrahmen ausgeführten Zwischenträger mit weiteren Anbauteilen;
- Figur 5: zeigt eine Darstellung einer dritten Schienenkonstruktion mit einem als Normgitterrahmen ausgeführten Gitterträgerendstück mit weiteren Anbauteilen;
- Figur 6: zeigt eine als Schlitten ausgebildete Aufnahmevorrichtung für eine Fahrzeugattrappe mit geringer Masse;
- Figur 7: zeigt eine Aluminiumplatte zur Befestigung der Fahrzeugattrappe.

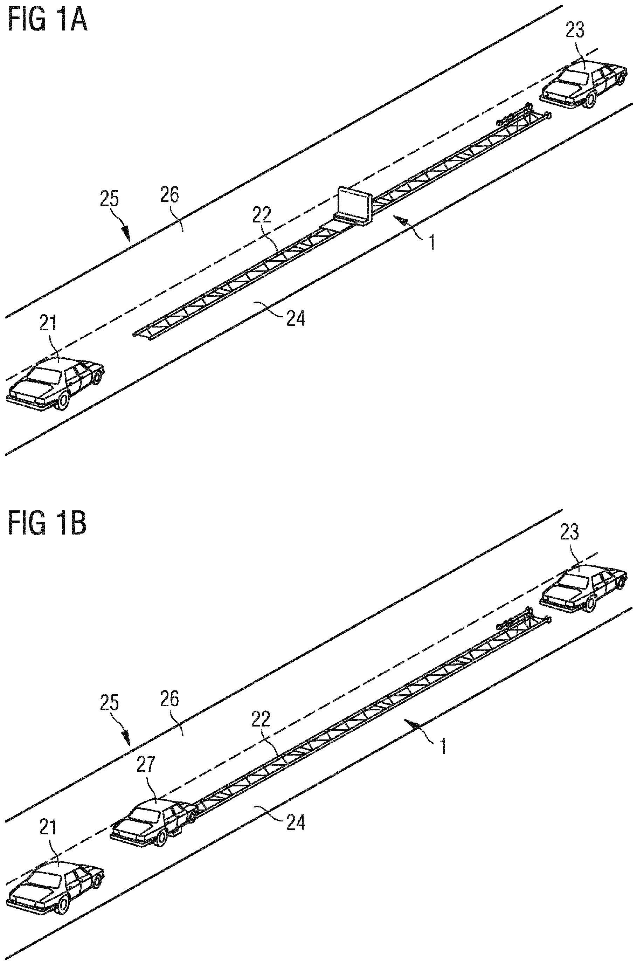

Figur 1A zeigt eine schematische Darstellung einer Ausführungsform einer erfindungsgemäßen Testvorrichtung 1 mit einer Aufnahmevorrichtung für eine Fahrzeugattrappe geringer Masse insbesondere für den Test vorausschauender Frontschutzsysteme eines Testfahrzeugs 21 im Fahrbetrieb.

Die Testvorrichtung 1 mit einer Aufnahmevorrichtung für eine Fahrzeugattrappe geringer Masse für den Test vorausschauender Frontschutzsysteme des Testfahrzeugs 21 weist in der gezeigten Ausführungsform ein auf Führungsrollen gelagertes Schienensystem 22 auf, das von einem Zugfahrzeug 23 gezogen wird. Figur 1A zeigt die Testvorrichtung 1 und das Zugfahrzeug 23, bevor die Testvorrichtung 1 und des Zugfahrzeugs 23 miteinander verbunden werden.

Wie in Figur 1A gezeigt ist, sind das Testfahrzeug 21, das Zugfahrzeug 23 und die Testvorrichtung 1 mit der Aufnahmevorrichtung für eine Fahrzeugattrappe auf einer gemeinsamen Fahrspur 24 einer Fahrbahn 25 angeordnet. Die Testvorrichtung 1 ist hinter dem Zugfahrzeug 23 angeordnet und das Testfahrzeug 21 ist hinter der Testvorrichtung 1 auf der Fahrspur 24 angeordnet. Die Fahrbahn 25 weist eine weitere Fahrspur 26 auf, die benachbart zu der Fahrspur 24 angeordnet ist. Das Testfahrzeug 21, das Zugfahrzeug 23 und die Testvorrichtung 1 bewegen sich während des Testbetriebs in einer gemeinsamen Richtung auf der Fahrspur 24, welche eine Richtung im Wesentlichen parallel zu der Längsachse des Zugfahrzeugs 23 ist.

Figur 1B zeigt eine schematische Darstellung einer Ausführungsform einer erfindungsgemäßen Testvorrichtung 1 mit einer Aufnahmevorrichtung für eine Fahrzeugattrappe 27 geringer Masse. Komponenten mit den gleichen Funktionen wie in Figur 1A werden mit den gleichen Bezugszeichen gekennzeichnet und im Folgenden nicht nochmals erläutert.

Die Fahrzeugattrappe 27 kann als ein Balloon Car ausgebildet sein, d.h. als eine aufblasbare Fahrzeugattrappe. Wie in Figur 1B gezeigt ist, sind die Fahrzeugattrappe 27 und die Aufnahmevorrichtung für die Fahrzeugattrappe 27 vor einem Anprall des Testfahrzeugs 21 an einem distal zu dem Zugfahrzeug 23 gelegenen Ende der Testvorrichtung 1 angeordnet, wenn ein Test für das Testfahrzeug 21, insbesondere ein Test zum Testen vorausschauender Frontschutzsysteme des Testfahrzeugs 21, ausgeführt wird. Das Testfahrzeug 21 folgt der Fahrzeugattrappe 27 typischerweise mit einer höheren Differenzgeschwindigkeit, um einen Anprall zu provozieren, d.h. die Geschwindigkeit des Testfahrzeugs 21 ist größer als die Geschwindigkeit des Zugfahrzeugs 23.

Aus Sicht des Testfahrzeugs 21 sind das Zugfahrzeug 23 und das Schienensystem 22 der Testvorrichtung 1, das bodennah, d.h. in der Nähe der Oberfläche der Fahrbahn 25, angeordnet ist, durch die an dem distalen Ende der Testvorrichtung 1 angeordnete Fahrzeugattrappe 27 vor einem Anprall des Testfahrzeugs 21 im Wesentlichen verdeckt. Dadurch wird eine gute Unterscheidung zwischen der Fahrzeugattrappe 27 und dem Zugfahrzeug 23 erreicht, insbesondere für vorausschauende Frontschutzsysteme des Testfahrzeugs 21, d.h. die Fahrzeugattrappe 27 wird als das relevantes Ziel für Assistenzsysteme des Testfahrzeugs 21 identifiziert. Nach einer Kollision des Testfahrzeugs 21 mit der Fahrzeugattrappe 27 kann das Testfahrzeug 21 das Schienensystem 22 der Testvorrichtung 1 in Längsrichtung überfahren.

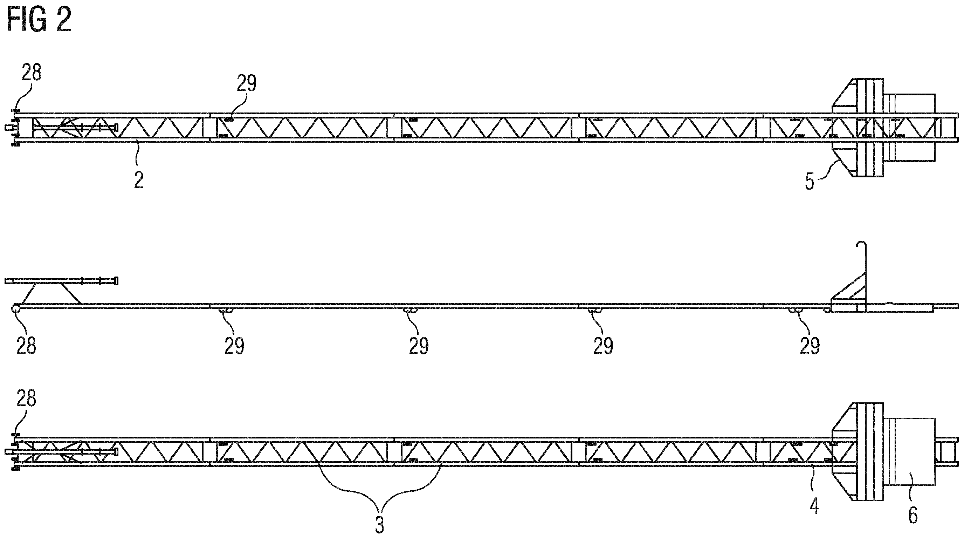

Wie in Figur 2 gezeigt ist, beinhaltet das Schienensystem 22 ein Gitterträgeranfangsstück 2, das während des Testbetriebs proximal zu dem Zugfahrzeug ist, mehrere Zwischenträger 3 und ein Gitterträgerendstück 4, das während des Testbetriebs distal zu dem Zugfahrzeug ist und auf dem eine Aufnahmevorrichtung in Form eines Schlittens 5 zur Aufnahme einer Fahrzeugattrappe mit geringer Masse sowie eine Aluminiumplatte 6 zur Befestigung der Fahrzeugattrappe aufgesetzt sind. Die Verbindung der Teilstücke, d.h. des Gitterträgeranfangsstücks 2, der Zwischenträger 3 und des Gitterträgerendstücks 4 erfolgt in der gezeigten Ausführungsform über eine durch Schrauben gesicherte Steckverbindung.

Wie in Figur 2 gezeigt ist, weist das Gitterträgeranfangsstück 2 große Führungsrollen 28 mit Fahrbahnkontakt auf und die Zwischenträger 3 sowie das Gitterträgerendstück 4 weisen jeweils kleine Führungsrollen 29 mit Fahrbahnkontakt auf.

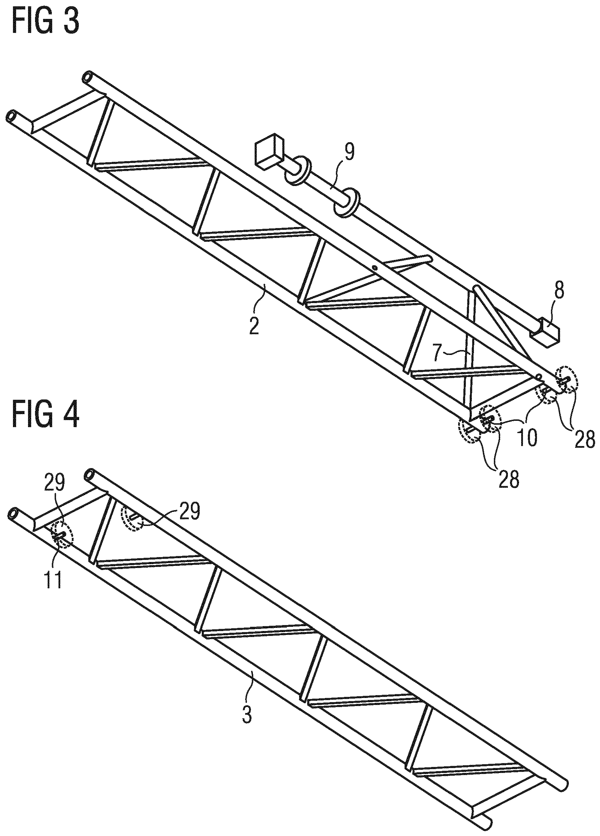

Das Gitterträgeranfangsstück 2 besteht, wie in Figur 3 dargestellt ist, in der gezeigten Ausführungsform aus einem Normgitterrahmen sowie einem verschweißten Zusatzgestell 7, auf dessen Oberseite sich eine Anhängevorrichtung 8 für ein Zugfahrzeug sowie gegenüberliegend auf Höhe der Anhängevorrichtung 8 ein Federsystem 9 befinden, um die Bewegungsenergie des Schlittens 5 zur Aufnahme einer Fahrzeugattrappe mit geringer Masse in der Feder zu dämpfen und über die Anhängevorrichtung 8 in das Zugfahrzeug zu leiten. Ein Aufnahmesystem 10 für die großen Führungsrollen 28 unterhalb einer Anhängerkupplung schützt die Testvorrichtung 1 im Falle eines Durchfederns des Zugfahrzeuges und dem damit verbundenen Aufsetzen der Testvorrichtung 1. Weitere Aufnahmesysteme für kleine Führungsrollen können auf der Innenseite des Normgitterrahmens ergänzt werden. Die bevorzugte Länge für das Gitterträgeranfangsstück 2 liegt bei 3.200 mm, die bevorzugte Höhe für die Anhängerkupplung liegt bei 430 - 530 mm.

Wie in Figur 4 gezeigt ist, besteht der Zwischenträger 3 in der gezeigten Ausführungsform aus einem Normgitterrahmen mit einem auf der Innenseite angebrachten Aufnahmesystem 11 für die kleinen Führungsrollen 29, wobei die Zahl der kleinen Führungsrollen 29 abhängig von der Untergrundbeschaffenheit variieren kann, sofern mindestens zwei Aufnahmesysteme je Zwischenträger 3 vorgesehen sind. Die bevorzugte Länge für den Zwischenträger 3 liegt bei 3.000 mm, die bevorzugte Höhe der Gitterträgerkonstruktion über der Straße liegt bei weniger als 70 mm. Die Zahl der Zwischenträger 3 variiert in Abhängigkeit von der Differenzgeschwindigkeit zum Zeitpunkt des Anpralls.

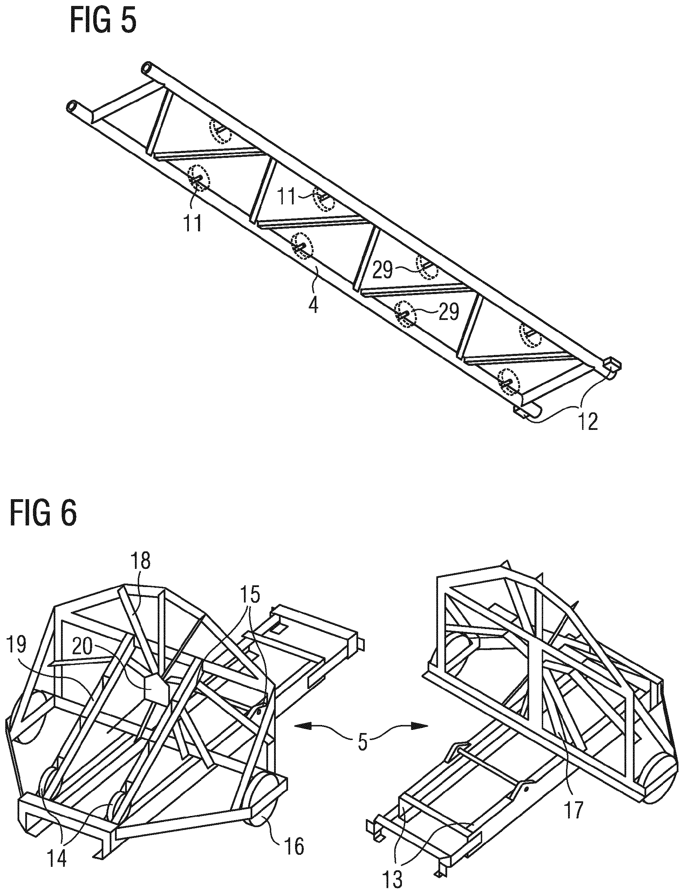

Das Gitterträgerendstück 4 besteht, wie in Figur 5 dargestellt ist, in der gezeigten Ausführungsform aus einem Normgitterrahmen, zwei Federsystemen 12, um den Schlitten 5 zur Aufnahme einer Fahrzeugattrappe vor dem Abrutschen von der Schienenkonstruktion zu sichern, sowie bevorzugt mindestens sechs auf der Innenseite angebrachten Aufnahmesystemen 11 für die kleinen Führungsrollen 29, da sich der Schlitten 5 zur Aufnahme einer Fahrzeugattrappe den größten Teil des Testbetriebes über in dem Gitterträgerendstück 4 befindet und im Falle eines Anpralls die höchste Belastung erfährt. Die bevorzugte Länge für das Gitterträgerendstück 4 liegt bei 3.000 mm, die bevorzugte Höhe der Gitterträgerkonstruktion über der Straße liegt bei weniger als 70 mm.

Figur 6 zeigt eine als Schlitten 5 ausgebildete Aufnahmevorrichtung für eine Fahrzeugattrappe mit geringer Masse.

Der Schlitten 5 ist als Trägergestell für eine Fahrzeugattrappe ausgelegt. Typischerweise handelt es sich bei der nicht näher dargestellten Fahrzeugattrappe um die Hülle eines sog. Balloon Cars, Befestigungsmaterial, sowie systemtypische Merkmale eines Kraftfahrzeuges (z.B. Radarreflektoren, Schlussleuchten, Nummernschild, Heckscheibe, Schatten), das durch Sensoren der vorausschauenden Frontschutzsysteme des Testfahrzeugs als Fahrzeug identifiziert werden kann. Der Schlitten 5 zur Aufnahme einer Fahrzeugattrappe mit geringer Masse hält seine Position durch zwei U-Profile 13 und vier Führungsrollen 14, 15 in zwei Größendimensionen auf der Schiene. Die ersten Führungsrollen 14 weisen dabei eine erste Größendimension und die zweiten Führungsrollen 15 eine zweite Größendimension auf. Zwei große Rollen in Form von Seitenführungsrollen 16 an den Seiten des Schlittens 5 dienen der Seitenführung und verhindern ein Kippen. Kommt es in Folge der Differenzgeschwindigkeit zu einem Anprall des Testfahrzeuges an den Schlitten 5 zur Aufnahme einer Fahrzeugattrappe mit geringer Masse, so läuft der Schlitten 5 mit den vier Führungsrollen 14, 15 auf der Schiene, wobei die Seitenführung und vertikales Abspringen durch die U-Profile 13 gesichert werden.

Der Schlitten 5 verfügt in der gezeigten Ausführungsform zudem über ein vertikal ausgerichtetes Zusatzgestell 17, bestehend aus sternförmig ausgerichteten Streben 18, die in einem Bogen miteinander verbunden sind, um die Kraft im Falle eines Anpralls gleichmäßig zu verteilen. Diese Konstruktion ist durch zwei diagonal verlaufende Streben 19 nach vorne abgestützt, um das Kippmoment über die Führungsrollen 14 abzufangen. In dem Zusatzgestell 17 ist mittig eine Prallplatte 20 angebracht, um die Kraft beim Anprall des Schlittens 5 auf das Federsystem 9 des Gitterträgeranfangsstücks 2 einzuleiten.

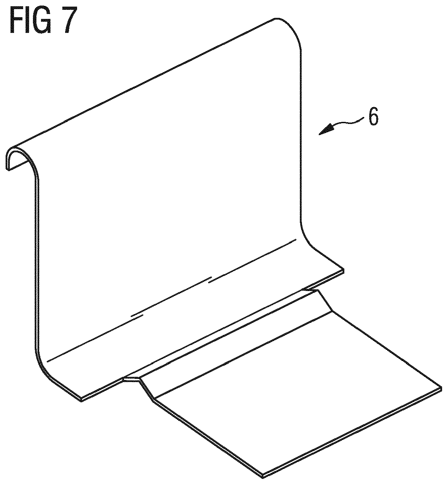

Eine in Figur 7 dargestellte Aluminiumplatte 6 dient der Befestigung der Fahrzeugattrappe, schützt diese vor Beschädigungen und verteilt die Aufprallenergie gleichmäßig auf die in Figur 6 gezeigten sternförmig ausgerichteten Streben 18.

Das beschriebene Bauprinzip der Testvorrichtung 1 mit einer Aufnahmevorrichtung für eine Fahrzeugattrappe für den Test beispielsweise vorausschauender Frontschutzsysteme eignet sich insbesondere hervorragend für Auslegungs- und Testfahrten auf geraden Strecken mit Differenzgeschwindigkeiten vor dem Anprall von bis zu 50 km/h Geschwindigkeit bei einer Nenngeschwindigkeit des Zugfahrzeuges von 80 km/h und einer Gesamtlänge von mindestens 9.200 mm.

### Bezugszeichenliste

- 1: Testvorrichtung
- 2: Gitterträgeranfangsstück
- 3: Zwischenträger
- 4: Gitterträgerendstück
- 5: Schlitten
- 6: Aluminiumplatte
- 7: Zusatzgestell
- 8: Anhängevorrichtung
- 9: Federsystem
- 10: Aufnahmesystem (für große Führungsrollen)
- 11: Aufnahmesystem (für kleine Führungsrollen)
- 12: Federsystem
- 13: U-Profil
- 14: Führungsrolle
- 15: Führungsrolle
- 16: Seitenführungsrolle
- 17: Zusatzgestell
- 18: Streben
- 19: Streben
- 20: Prallplatte
- 21: Testfahrzeug
- 22: Schienensystem
- 23: Zugfahrzeug
- 24: Fahrspur
- 25: Fahrbahn
- 26: Fahrspur
- 27: Fahrzeugattrappe
- 28: Führungsrolle
- 29: Führungsrolle

## Patentansprüche

1. Testvorrichtung zum Testen von Testfahrzeugen, wobei die Testvorrichtung (1) eine Aufnahmevorrichtung für eine Fahrzeugattrappe aufweist, **gekennzeichnet dadurch dass** die Aufnahmevorrichtung für eine Fahrzeugattrappe auf einem fahrbaren Schienensystem (22) der Testvorrichtung (1) aufgesetzt und verschiebbar angeordnet ist, wobei das Schienensystem (22) auf Führungsrollen (28, 29) gelagert ist und wobei die Aufnahmevorrichtung für eine Fahrzeugattrappe Seitenführungsrollen (16) aufweist.

2. Testvorrichtung nach Anspruch 1, **dadurch gekennzeichnet, dass** die Aufnahmevorrichtung für eine Fahrzeugattrappe schlittenartig ausgebildet ist.

3. Testvorrichtung nach Anspruch 1 oder Anspruch 2, **dadurch gekennzeichnet, dass** die Aufnahmevorrichtung für eine Fahrzeugattrappe ein vertikal ausgerichtetes Zusatzgestell (17) aufweist.

4. Testvorrichtung nach einem der vorhergehenden Ansprüche, **dadurch gekennzeichnet, dass** das Schienensystem eine Anhängevorrichtung (8) aufweist.

5. Testvorrichtung nach einem der vorhergehenden Ansprüche, **dadurch gekennzeichnet, dass** das Schienensystem zudem zumindest ein Federsystem (9, 12) aufweist.

6. Testvorrichtung nach einem der vorhergehenden Ansprüche, **dadurch gekennzeichnet, dass** die Länge des Schienensystems (22) durch Anfangs- und Endstücke sowie eine variable Zahl von Mittelstücken in Abhängigkeit von in die Aufnahmevorrichtung eingeleiteter Energie eingestellt ist.

7. Testvorrichtung nach Anspruch 6, **dadurch gekennzeichnet, dass** die Anfangs-, End- und Mittelstücke des Schienensystems (22) durch gesicherte Verbindung zusammengefügt sind.

8. Testvorrichtung nach Anspruch 6 oder Anspruch 7, **dadurch gekennzeichnet, dass** das Schienensystem (22) ein Gitterträgeranfangsstück (2), mehrere Zwischenträger (3) und ein Gitterträgerendstück (4) beinhaltet, wobei die Höhe der Gitterträgerkonstruktion über der Straße bei weniger als 70 mm liegt.

9. Baugruppe aus einem Zugfahrzeug, einer Fahrzeugattrappe und einer Testvorrichtung nach einem der vorhergehenden Ansprüche.

10. Baugruppe nach Anspruch 9, wobei die Fahrzeugattrappe als Balloon Car ausgebildet ist.

11. Verfahren zum Testen eines Testfahrzeugs mittels eines Zugfahrzeugs, einer Fahrzeugattrappe und einer Testvorrichtung (1) nach einem der Ansprüche 1 bis 8,
dadurch gekenzeichnet das
Verfahren folgende Schritte aufweist:
- Anordnen der Testvorrichtung (1) hinter dem Zugfahrzeug und des Testfahrzeugs hinter der Testvorrichtung (1) auf einer gemeinsamen Fahrspur;
- Verbinden der Testvorrichtung (1) und des Zugfahrzeugs miteinander;
- Positionieren der Aufnahmevorrichtung für eine Fahrzeugattrappe und der Fahrzeugattrappe in einer Anfangsposition auf dem fahrbaren Schienensystem (22) der Testvorrichtung (1);
- Beschleunigen des Zugfahrzeugs in einer ersten Richtung auf der gemeinsamen Fahrspur auf eine erste Geschwindigkeit v₁;
- Beschleunigen des Testfahrzeugs in der ersten Richtung auf der gemeinsamen Fahrspur auf eine zweite Geschwindigkeit v₂;
- Testen zumindest einer Komponente des Testfahrzeugs zumindest teilweise während des Beschleunigens des Zugfahrzeugs auf die erste Geschwindigkeit v₁ und des Beschleunigens des Testfahrzeugs auf die zweite Geschwindigkeit v₂.

12. Verfahren nach Anspruch 11, **dadurch gekennzeichnet, dass** die Anfangsposition an einem distal zu dem Zugfahrzeug gelegenen Ende der Testvorrichtung (1) gelegen ist.

13. Verfahren nach Anspruch 12, **dadurch gekennzeichnet, dass** das Zugfahrzeug und das Schienensystem der Testvorrichtung (1) aus Sicht des Testfahrzeugs durch die an dem distal zu dem Zugfahrzeug gelegenen Ende der Testvorrichtung (1) angeordnete Fahrzeugattrappe im Wesentlichen verdeckt sind.

14. Verfahren nach einem der Ansprüche 11 bis 13, **dadurch gekennzeichnet, dass** v₂ > v₁.

15. Verfahren nach einem der Ansprüche 11 bis 14, **dadurch gekennzeichnet, dass** das Testfahrzeug das Schienensystem der Testvorrichtung (1) nach einer Kollision des Testfahrzeugs mit der Fahrzeugattrappe in Längsrichtung überfährt.

## Claims

1. Testing device for testing test vehicles, wherein the testing device (1) comprises a location device for a dummy vehicle, **characterised in that** the location device for a dummy vehicle is mounted and arranged displaceably on a mobile rail system (22) of the testing device (1), the rail system (22) being mounted on guide rollers (28, 29) and the location device for a dummy vehicle having lateral guide rollers (16).

2. Testing device according to claim 1, **characterised in that** the location device for a dummy vehicle is designed in the manner of a slide.

3. Testing device according to claim 1 or 2, **characterised in that** the location device for a dummy vehicle comprises a vertically oriented auxiliary frame (17).

4. Testing device according to any of the preceding claims, **characterised in that** the rail system comprises a towing device (8).

5. Testing device according to any of the preceding claims, **characterised in that** the rail system comprises in addition at least one spring system (9, 12).

6. Testing device according to any of the preceding claims, **characterised in that** the length of the rail system (22) is adjusted by start and end pieces and a variable number of intermediate pieces in a manner dependent on the energy introduced into the location device.

7. Testing device according to claim 6, **characterised in that** the start, end and intermediate pieces of the rail system (22) are joined by a secured connection.

8. Testing device according to claim 6 or 7, **characterised in that** the rail system (22) includes a lattice truss start piece (2), several intermediate trusses (3) and a lattice truss end piece (4), the height of the lattice truss structure above the road being less than 70 mm.

9. Assembly of a towing vehicle, a dummy vehicle and a testing device according to any of the preceding claims.

10. Assembly according to claim 9, wherein the dummy vehicle is designed as a balloon car.

11. Method for testing a test vehicle by means of a towing vehicle, a dummy vehicle and a testing device (1) according to any of claims 1 to 8, **characterised in that** the method comprises the following steps:
- the placement of the testing device (1) behind the towing vehicle and of the test vehicle behind the testing device (1) on a common lane;
- the connection of the testing device (1) and the towing vehicle;
- the positioning of the location device for a dummy vehicle and of the dummy vehicle in a starting position on the mobile rail system (22) of the testing device (1);
- the acceleration of the towing vehicle in a first direction to a first speed v₁ on the common lane;
- the acceleration of the towing vehicle in the first direction to a second speed v₂ on the common lane;
- the testing of at least one component of the test vehicle at least partially during the acceleration of the towing vehicle to the first speed v₁ and the acceleration of the towing vehicle to the second speed v₂.

12. Method according to claim 11, **characterised in that** the starting position is situated at an end of the testing device (1) which is distal relative to the towing vehicle.

13. Method according to claim 12, **characterised in that** the towing vehicle and the rail system of the testing device (1) are, from the viewpoint of the test vehicle, substantially covered by the dummy vehicle arranged at the end of the testing device (1) which is distal relative to the towing vehicle.

14. Method according to any of claims 11 to 13, **characterised in that** v₂ > v₁.

15. Method according to any of claims 11 to 14, **characterised in that** the test vehicle passes over the rail system of the testing device (1) in the longitudinal direction after a collision of the test vehicle with the dummy vehicle.

## Revendications

1. Dispositif de test destiné à tester des véhicules de test, le dispositif de test (1) présentant un dispositif de réception pour un véhicule factice, **caractérisé en ce que** le dispositif de réception pour un véhicule factice est placé sur un système de rails (22) du dispositif de test (1) et peut se déplacer, le système de rails (22) est monté sur des galets de guidage (28, 29) et le dispositif de réception pour un véhicule factice présente des galets de guidage latéraux (16).

2. Dispositif de test selon la revendication 1, **caractérisé en ce que** le dispositif de réception pour un véhicule factice conçu en forme de chariot.

3. Dispositif de test selon la revendication 1 ou la revendication 2, **caractérisé en ce que** le dispositif de réception pour un véhicule factice présente un châssis supplémentaire monté à la verticale.

4. Dispositif de test selon l'une quelconque des revendications précédentes, **caractérisé en ce que** le système de rails présente un dispositif de traction (8).

5. Dispositif de test selon l'une quelconque des revendications précédentes, **caractérisé en ce que** le système de rails présente en outre au moins un système de ressort (9, 12).

6. Dispositif de test selon l'une quelconque des revendications précédentes, **caractérisé en ce que** la longueur du système de rails (22) est réglée par des éléments de début et de fin ainsi qu'un certain nombre d'éléments centraux en fonction de l'énergie induite dans le dispositif de réception.

7. Dispositif de test selon la revendication 6, **caractérisé en ce que** les éléments de début, de fin et centraux du système de rails (22) sont assemblés par une liaison verrouillable.

8. Dispositif de test selon la revendication 6 ou la revendication 7, **caractérisé en ce que** le système de rails (22) comprend un élément de début de poutre en treillis (2), plusieurs supports intermédiaires (3) et un élément final de poutre en treillis (4), la hauteur de la construction de poutre en treillis est inférieure ou égale à 70 mm audessus de la route.

9. Module constitué d'un véhicule tracteur, d'un véhicule factice et d'un dispositif de test selon l'une quelconque des revendications précédentes.

10. Module selon la revendication 9, le modèle réduit de véhicule automobile est conçu comme un Ballon Car.

11. Procédé de test d'un véhicule de test au moyen d'un véhicule tracteur, d'un véhicule factice et d'un dispositif de test (1) selon l'une quelconque des revendications 1 à 8, **caractérisé en ce que** le procédé comprend les étapes suivantes consistant à :
- disposer le dispositif de test (1) derrière le véhicule tracteur et le véhicule de test derrière le dispositif de test (1) sur une voie de circulation commune ;
- relier le dispositif de test (1) et le véhicule tracteur ;
- positionner le dispositif de réception pour un véhicule factice et le véhicule factice dans une position de démarrage sur le système de rails (22) mobile du dispositif de test (1) ;
- faire accélérer le véhicule tracteur dans une première direction sur la voie de circulation commune pour atteindre une première vitesse v₁ ;
- faire accélérer le véhicule de test dans une première direction sur la voie de circulation commune pour atteindre une seconde vitesse v₂.

12. Procédé selon la revendication 11, **caractérisé en ce que** la position de démarrage est située à une extrémité distale du dispositif de test (1) par rapport au véhicule tracteur.

13. Procédé selon la revendication 12, **caractérisé en ce que** le véhicule tracteur et le système de rails du dispositif de test (1) d'un point de vue du véhicule de test est essentiellement masqué par le véhicule factice disposé sur l'extrémité distale du dispositif de test (1) par rapport au véhicule tracteur.

14. Procédé selon l'une quelconque des revendications 11 à 13, **caractérisé en ce que** V2 > V1.

15. Procédé selon l'une quelconque des revendications 11 à 14, **caractérisé en ce que** le véhicule de test dépasse le système de rails du dispositif de test (1) après une collision du véhicule de test avec le véhicule factice dans la direction longitudinale.
